## Europäisches Patentamt

## European Patent Office

## Office européen des brevets

(19)

(11) Veröffentlichungsnummer: **0 157 148**
**B1**

(12) **EUROPÄISCHE PATENTSCHRIFT**

(45) Veröffentlichungstag der Patentschrift:
**31.05.89**

(51) Int. Cl.⁴: **G 01 B 11/04**

(21) Anmeldenummer: **85101930.7**

(22) Anmeldetag: **22.02.85**

(54) Verfahren zur berührungslosen Messung der Länge eines bewegten Gegenstandes und Messvorrichtung zur Durchführung des Verfahrens.

(30) Priorität: **25.02.84 DE 3406872**

(43) Veröffentlichungstag der Anmeldung:
**09.10.85 Patentblatt 85/41**

(45) Bekanntmachung des Hinweises auf die Patenterteilung:
**31.05.89 Patentblatt 89/22**

(84) Benannte Vertragsstaaten:
**AT BE CH DE FR GB IT LI LU NL SE**

(56) Entgegenhaltungen:
**EP-A-0 066 321**
**EP-A-0 068 431**
**DE-A-3 129 034**
**US-A-4 410 910**

**9th World Congress of IMEKO, 1983, Westberlin, paper 13.3, S. 11-20**

**Die Akte enthält technische Angaben, die nach dem Eingang der Anmeldung eingereicht wurden und die nicht in dieser Patentschrift enthalten sind.**

(73) Patentinhaber: **Massen, Robert, Prof. Dr.,**
**Kämpfenstrasse 39, D-7760 Radolfzell 18 (DE)**

(72) Erfinder: **Massen, Robert, Prof. Dr.,**
**Kämpfenstrasse 39, D-7760 Radolfzell 18 (DE)**

(74) Vertreter: **Leiser, Gottfried, Dipl.- Ing.,**
**Patentanwälte Prinz, Leiser, Bunke & Partner**
**Manzingerweg 7, D-8000 München 60 (DE)**

EP 0 157 148 B1

**Beschreibung**

Die Erfindung betrifft ein Verfahren zur berührungslosen Messung der Länge eines bewegten Gegenstandes mit strukturierter Oberfläche, bei welchem Videobilder der Oberfläche des bewegten Gegenstandes aufgenommen werden und in aufeinanderfolgenden Meßzyklen jeweils das Helligkeitsprofil von wenigstens einer ausgewählten Bildzeile eines ersten Videobildes abgespeichert wird, das bzw. jedes abgespeicherte Helligkeitsprofil mit den Helligkeitsprofilen von Bildzeilen eines nach einer vorbestimmten Wartezeit abgetasteten zweiten Videobildes durch Bildung einer Ähnlichkeitsfunktion verglichen wird, aus dem Extremwert der Ähnlichkeitsfunktion die während der Wartezeit erfolgte Momentanverschiebung des bewegten Gegenstandes ermittelt wird und die in aufeinanderfolgenden Meßzyklen ermittelten Momentanverschiebungen summiert werden, sowie eine Meßvorrichtung zur Durchführung des Verfahrens.

Das berührungslose Abmessen von Längen in einem Produktionsprozeß ist eine häufige und schwierige Aufgabenstellung. Typische Beispiele hierzu sind die Messung der Länge von rotglühendem Strangguß zur Steuerung der Zuschneidemaschine, die Längenmessung an dünnen Papierbahnen zur Steuerung der Aufwickelmaschinen u.ä. In allen diesen und ähnlichen Fällen interessiert die ab einem bestimmten Startzeitpunkt durchgelaufene Länge. Diese aufsummierte Länge wird fortlaufend mit einem Sollwert verglichen, und bei Erreichen der Gleichheit wird beispielsweise die Zuschneidemaschine ausgelöst. Jede Ungenauigkeit dieser Messung muß aus kaufmännischen Gründen überkompensiert werden, damit der Kunde mit Sicherheit mindestens die bestellte Länge erhält. Solche Ungenauigkeiten stellen damit auch einen unerwünschten Kostenfaktor dar, dessen Verringerung wirtschaftlich geboten ist.

Das Problem des Zuschneidens von rotglühendem Strangguß läßt die Schwierigkeit dieser Problemstellung erkennen. Strangguß verläßt den Gieß- und Walzprozeß mit schnellen Geschwindigkeitsschwankungen zwischen 1 m/min und 5 m/min, wobei die Periode der Geschwindigkeitsschwankungen etwa 300 ms beträgt. Er wird auf typische Längen von 10- 15 m zugeschnitten, wobei eine Genauigkeit von 0,1 % angestrebt wird. Eine Längenmessung mit dieser Genauigkeit ist aus der Umdrehung des Rollengangs wegen des unvermeidlichen Schlupfes nicht möglich. Andererseits lassen sich an die rotglühende Oberfläche weder mechanisch berührende Aufnehmer aufsetzen noch einfach auswertbare optische Marken anbringen.

Herkömmliche berührungslos arbeitende Meßverfahren beruhen auf dem Doppler-Geschwindigkeitsverfahren oder dem Korrelations-Laufzeitverfahren. Beide Verfahren versagen aber im Bereich niedriger Geschwindigkeiten. Bei den Dopplerverfahren werden die auszuwertenden Frequenzunterschiede zwischen Sendefrequenz und Empfangsfrequenz bei niedriger Geschwindigkeit sehr klein, so daß sie im Frequenzrauschen untergehen. Bei den korrelativen Laufzeitmeßverfahren wird die Laufzeit des bewegten Gegenstandes zwischen zwei in Bewegungsrichtung im Abstand voneinander angebrachten Sensoren ermittelt. Bei langsamen Geschwindigkeiten ergeben sich lange Laufzeiten und damit auch sehr lange Meßzeiten, insbesondere auch deswegen, weil die Sensoren in diesem Bereich nur sehr tieffrequente Signale auswerten, was wiederum zur Erreichung der erforderlichen statistischen Genauigkeit lange Mittelungszeiten und somit entsprechend lange Meßzeiten bedingt.

Sowohl Dopplerverfahren als auch korrelative Laufzeitmeßverfahren setzen zumindest während der eigentlichen Meßzeit stationäre Verhältnisse, d.h. eine konstante Geschwindigkeit voraus. Auch diese Voraussetzung ist beim Strangguß nicht gegeben, weil hier relativ rasche Geschwindigkeitsschwankungen mit großer Amplitude vorliegen. Wird bei diesen Verfahren die Geschwindigkeit über der Zeit integriert, um die Gesamtlänge zu ermitteln, so wirken sich Geschwindigkeitsfehler nur dann wenig aus, wenn sie symmetrisch verteilt sind. Dies ist aber z. B. bei den korrelativen Laufzeitverfahren nicht der Fall.

In dem Aufsatz von T. Idogawa, K. Nagai und H. Akazawa "Displacement measurement by coincidence of random-pattern images using crosscorrelation", 9th World Congress of IMEKO, 1983, Westberlin, paper 13.3, ist ein Verfahren zur berührungslosen Messung der Länge eines bewegten Gegenstandes mit strukturierter Oberfläche beschrieben, bei welchem die Oberfläche des bewegten Gegenstandes mit Hilfe einer Videokamera aufgenommen wird, deren Zeilenabtastung senkrecht zur Bewegung des Gegenstandes ausgerichtet ist. Das digitalisierte Helligkeitsprofil einiger Zeilen des Videobildes wird gespeichert, und die gespeicherten Helligkeitsprofile werden in einem Echtzeit-Verfahren mit den Helligkeitsprofilen aller Zeilen eines nach einer Wartezeit aufgenommenen weiteren Videobildes während des Abtastvorgangs und synchron mit dem Bildpunkttakt der Videokamera durch Bildung der Kreuzkorrelationsfunktion verglichen. Dieses Verfahren benötigt daher nur einen Profilspeicher. Die Auswertung der Ähnlichkeitsmaße erfolgt über eine angeschlossene Recheneinheit. Bei diesem Verfahren ist die Quantisierung der meßbaren Verschiebung gleich dem Abstand zweier Zeilen und damit durch die Fernsehnorm festgelegt (z. B. 256 Zeilen je US-Halbbild oder 312 Zeilen je Euro-Halbbild). Durch die gewählte Abtastung einer sich senkrecht zur Zeilenrichtung bewegenden Vorlage beträgt eine Abtastperiode 17 ms (bei US-Norm) bzw. 20 ms (bei Euro-Norm). Während dieser Zeit sollte sich die Vorlage nur sehr wenig bewegen, um Bewegungsunschärfen zu vermeiden. Außerdem sollte ein Momentanbild abgespeichert werden. Die Geschwindigkeit der Vorlage (auf der Photokatode der Videokamera) muß also sehr viel langsamer als die vertikale Abtastgeschwindigkeit der Photokatode durch den abtastenden Elektronenstrahl der Videokamera selbst sein. Andernfalls ist eine stroboskopische Beleuchtung oder die Verwendung einer Synchronblende unumgänglich. Das Problem der Zeitlücken und des Erfassens ruckhafter Bewegungen wird in der genannten Veröffentlichung nicht behandelt. Schließlich ist bei diesem bekannten Verfahren eine Differenzierung des Videosignals zur Betonung der Kanten des Helligkeitsprofils durch ein Zeitfilter nicht möglich, da bei einer Bewegung der Vorlage quer zur Zeilenabtastung örtlich aufeinanderfolgende Bildpunkte nicht zeitlich aufeinanderfolgen.

Aus der EP-A-0 068 431 ist andererseits ein Verfahren zur Messung der Geschwindigkeit von Walzgut bekannt, bei welchem eine in der Bewegungsrichtung des Walzguts verlaufende Zone der Walzgutoberfläche durch eine Streifenbildkamera (Zeilenkamera) abgetastet wird, die eine in dieser Bewegungsrichtung ausgerichtete Photodiodenzeile enthält. Eine an den Ausgang der Streifenbildkamera angeschlossene Auswerteinheit erzeugt ein der Geschwindigkeit des Walzguts proportionales Signal. Hierzu wird jeweils immer ein Oberflächenelement aufgrund der Strukturierung der Walzgutoberfläche durch ein Korrelationsverfahren ausgewählt und verfolgt. Aus der Bewegung des ausgewählten Oberflächenelements über die von der Photodiodenzeile erfaßte Zone hinweg und aus der Zeit, die beim Zurücklegen einer bestimmten Wegstrecke vergeht, wird die Geschwindigkeit des Oberflächenelements und damit des Walzguts bestimmt. In manchen Fällen kann es jedoch schwierig sein, ein bestimmtes Oberflächenelement mit ausreichender Sicherheit zu erkennen und zu verfolgen.

Aufgabe der Erfindung ist die Schaffung eines Verfahrens, das eine sichere und genaue berührungslose Messung der Länge eines bewegten Gegenstandes mit strukturierter Oberfläche bei beliebiger Vorschubgeschwindigkeit und auch bei nicht stationärer oder ruckhaft verlaufender Bewegung innerhalb einer kurzen Meßzeit mit geringem technischem Aufwand ermöglicht, sowie die Schaffung einer Vorrichtung zur Durchführung des Verfahrens.

Zur Lösung dieser Aufgabe ist das Verfahren der eingangs genannten Art nach der Erfindung dadurch gekennzeichnet, daß die Zeilenabtastung des Videobildes parallel zu der Bewegungsrichtung des bewegten Gegenstandes erfolgt, daß von dem nach der Wartezeit aufgenommenen zweiten Videobild das Helligkeitsprofil der gleichen ausgewählten Bildzeile bzw. die Helligkeitsprofile der gleichen ausgewählten Bildzeilen wie bei dem ersten Videobild abgespeichert werden und daß die Ähnlichkeitsfunktion durch Vergleich der abgespeicherten Helligkeitsprofile von jeweils zwei gleichen Bildzeilen der beiden Videobilder gebildet wird, wobei das abgespeicherte Helligkeitsprofil der Bildzeile des einen Videobildes gegen das abgespeicherte Helligkeitsprofil der Bildzeile des anderen Videobildes sukzessiv verschoben ausgelesen wird.

Bei dem Verfahren nach der Erfindung wird die Oberfläche der Vorlage in der Bewegungsrichtung in einer Zeit abgetastet, die gleich der Zeitdauer einer Zeilenabtastung ist, also bei der Euro-Norm lediglich 57 µs beträgt. Dies entspricht einer um den Faktor 350 höheren Abtastgeschwindigkeit als bei einer Abtastung der Oberfläche senkrecht zur Bewegungsrichtung und erlaubt demnach auch das Erfassen wesentlich schnellerer Bewegungen ohne den zusätzlichen Aufwand stroboskopischer Beleuchtung oder synchronisierter Blenden. Da weiterhin nur sich entsprechende Zeilen aus Bildpaaren verglichen werden, ist es unerheblich, wie lange die vertikale Abtastung der Vorlage dauert. Andererseits werden nicht nur einzelne Oberflächenelemente, sondern die ganzen Helligkeitsprofile der ausgewählten Bildzeilen für die Ermittlung der Momentanverschiebungen herangezogen. Da die jeweils paarweise miteinander verglichenen Helligkeitsprofile beide gespeichert sind, können sie zur Gewinnung jeder gewünschten Anzahl von Stützstellen der Ähnlichkeitsfunktion beliebig oft aus den Profilspeichern ausgelesen werden, wobei jeder Verschiebeindex der gegenseitigen Verschiebung beim Auslesen einer Stützstelle der Ähnlichkeitsfunktion entspricht. Dadurch läßt sich der Extremwert der Ähnlichkeitsfunktion mit großer Genauigkeit bestimmen.

Zur Vermeidung von Zeitlücken während der Berechnung der Ähnlichkeitsfunktion, in denen die Bewegung des Gegenstandes nicht erfaßt wird, besteht eine bevorzugte Weiterbildung des Verfahrens nach der Erfindung darin, daß in jedem Meßzyklus die Abspeicherung der Helligkeitsprofile der ausgewählten Bildzeilen von nur einem Videobild erfolgt, das im Abstand der Wartezeit nach dem Videobild abgetastet wird, dessen Helligkeitsprofile im vorhergehenden Meßzyklus abgespeichert worden sind, daß die Bestimmung der Ähnlichkeitsfunktion zwischen den Helligkeitsprofilen der in zwei aufeinanderfolgenden Meßzyklen abgetasteten Videobilder während der Wartezeit zwischen zwei für die Abspeicherung bestimmten Videobildabtastungen erfolgt, und daß die gespeicherten Helligkeitsprofile jedes in einem Meßzyklus abgetasteten Videobildes zunächst mit den gespeicherten Helligkeitsprofilen des im vorhergehenden Meßzyklus abgetasteten Videobildes und dann mit den gespeicherten Helligkeitsprofilen des im nachfolgenden Meßzyklus abgetasteten Videobildes verglichen werden.

Bei dieser Weiterbildung des Verfahrens werden die gespeicherten Helligkeitsprofile eines Videobildes zweimal zur Berechnung der Ähnlichkeitsfunktion verwendet, nämlich für das zweite Videobild im Meßzyklus der Abtastung und für das erste Videobild im nächsten Meßzyklus. Durch diesen alternierenden Wechselbetrieb werden Zeitlücken vermieden, da die Berechnung der Ähnlichkeitsfunktion innerhalb der Wartezeit zwischen zwei zur Abspeicherung verwendeten Videobildabtastungen erfolgt.

Der zuvor erwähnte Aufsatz von T. Idogawa, K. Nagai und H. Akazawa "Displacement measurement by coincidence of random-pattern images using crosscorrelation", 9th World Congress of IMEKO, 1983, Westberlin, paper 13.3, beschreibt auch bereits eine Meßvorrichtung zur berührungslosen Messung der Länge eines bewegten Gegenstandes mit strukturierter Oberfläche, mit einer zur Aufnahme eines Bildausschnitts der Oberfläche des bewegten Gegenstandes angeordneten Videokamera, einer Speicheranordnung für die Abspeicherung des Helligkeitsprofils von wenigstens einer Bildzeile eines von der Videokamera abgetasteten Videobildes, einer mit der Speicheranordnung verbundenen Recheneinheit, welche unter Verwendung der in der Speicheranordnung abgespeicherten Helligkeitsprofile eine Ähnlichkeitsfunktion berechnet und aus dem Extremwert der Ähnlichkeitsfunktion die Momentanverschiebung des bewegten Gegenstandes ermittelt und mit einer Ablaufsteuerung zur Steuerung des Einlesens der Helligkeitsprofile in die Speicheranordnung und der Verarbeitung der abgespeicherten Helligkeitsprofile.

Von dieser bekannten Meßvorrichtung unterscheidet sich die Meßvorrichtung nach der Erfindung dadurch, daß die Videokamera so ausgerichtet ist, daß die Zeilenabtastrichtung parallel zu der Bewegungsrichtung des bewegten Gegenstandes liegt, daß die Speicheranordnung zwei Profilspeicher enthält, von denen jeder eine für die Speicherung aller abzuspeichernden Helligkeitsprofile eines Videobildes ausreichende Kapazität hat, daß die Ablaufsteuerung das Einlesen der abzuspeichernden Helligkeitsprofile eines Videobildes in den einen Profilspeicher, nach Ablauf der Wartezeit das Einlesen der abzuspeichernden Helligkeitsprofile eines weiteren Videobildes in den anderen Profilspeicher und das gleichzeitige Auslesen der Inhalte der beiden Profilspeicher mit gegenseitig verschobenen Adressen zu der Recheneinheit steuert, in welcher in jedem Meßzyklus für jeden Verschiebeindex der sukzessiven Verschiebung ein Ähnlichkeitsmaß zwischen den Inhalten der beiden Profilspeicher gebildet und der Extremwert der sich aus den Ähnlichkeitsmaßen aller sukzessiven Verschiebungen ergebenden Ähnlichkeitsfunktion ermittelt wird, und daß die Recheneinheit aus dem diesem Extremwert entsprechenden Verschiebeindex der sukzessiven Verschiebung die Momentanverschiebung des bewegten Gegenstandes ermittelt und die in den aufeinanderfolgenden Meßzyklen erhaltenenen Momentanverschiebungen zur Bestimmung der aufgelaufenen Länge des bewegten Gegenstandes aufsummiert.

Zwar ist aus der EP-A-0 068 431 bereits eine Meßvorrichtung bekannt, bei der eine Streifenbildkamera so ausgerichtet ist, daß die Zeilenabtastrichtung parallel zu der Bewegungsrichtung des bewegten Gegenstandes liegt, doch erfolgt bei dieser bekannten Meßvorrichtung keine Speicherung von Helligkeitsprofilen in zwei Profilspeichern und demzufolge auch kein Auslesen der Helligkeitsprofile mit sukzessiv gegeneinander verschobenen Adressen.

Vorteilhafte Ausgestaltungen und Weiterbildungen der Erfindung sind in den Unteransprüchen gekennzeichnet.

Ausführungsbeispiele der Erfindung werden anhand der Zeichnung beschrieben. In der Zeichnung zeigt:

Fig. 1 die schematische Darstellung einer Meßvorrichtung für das berührungslose Abmessen der Länge von Strangguß,

Fig. 2 den von der Videokamera erfaßten Bildausschnitt mit den eingeblendeten, zur Längenmessung benutzten Bildzeilen,

Fig. 3 das Blockschaltbild einer Ausführungsform der Signalverarbeitungsschaltung der Meßvorrichtung von Fig. 1,

Fig. 4 den Verlauf einer durch Summe aller absoluten Differenzen gebildeten Ähnlichkeitsfunktion,

Fig. 5 den Verlauf der als Ähnlichkeitsfunktion gebildeten Kreuzkorrelationsfunktion,

Fig. 6 das Zeitdiagramm der einzelnen Phasen aufeinanderfolgender Meßzyklen bei dem mit der Signalverarbeitungsschaltung von Fig. 3 durchgeführten nicht-alternierenden Betrieb,

Fig. 7 das Blockschaltbild der für einen alternierenden Betrieb erweiterten Signalverarbeitungsschaltung der Meßvorrichtung und

Fig. 8 das Zeitdiagramm der einzelnen Phasen aufeinanderfolgender Meßzyklen bei dem mit der Signalverarbeitungsschaltung von Fig. 7 durchgeführten alternierenden Betrieb.

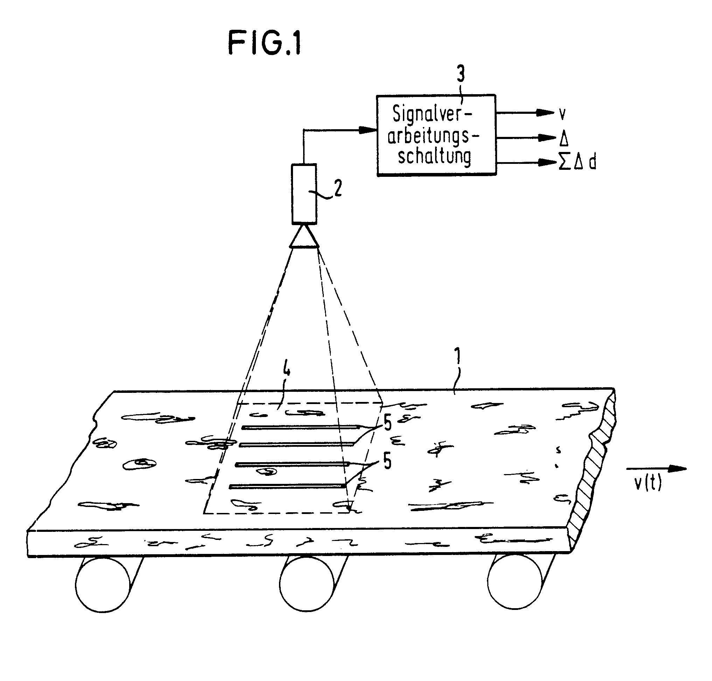

Fig. 1 zeigt einen Abschnitt eines Stranggußbandes 1, das sich vor dem Zuschneiden noch in rotglühendem Zustand befindet. Das Stranggußband 1 bewegt sich mit der Geschwindigkeit v(t) in der Pfeilrichtung. Die Oberfläche des Stranggußbandes 1 ist durch zahlreiche statistische Helligkeitsunterschiede infolge inhomogener Oberflächentemperatur, Sinterablagerungen o.ä. gekennzeichnet. Mit Hilfe einer vorzugsweise infrarotempfindlichen Videokamera 2 wird ein Bild dieser unregelmäßigen Oberfläche aufgenommen und in ein elektrisches Videosignal umgesetzt, das anschließend in einer elektronischen Signalverarbeitungsschaltung 3 digitalisiert, abgespeichert und ausgewertet wird. Zur Verringerung des technischen Aufwandes bei der Verarbeitung und Auswertung des Videosignals in der Signalverarbeitungsschaltung 3 ist die Videokamera 2 so ausgerichtet, daß die Bewegungsrichtung des Stranggußbandes 1 parallel zur Zeilenabtastrichtung liegt. In Fig. 1 ist der von der Videokamera 2 erfaßte Bildausschnitt 4 mit einigen parallel zur Bewegungsrichtung des Stranggußbandes 1 verlaufenden Bildzeilen 5 angedeutet.

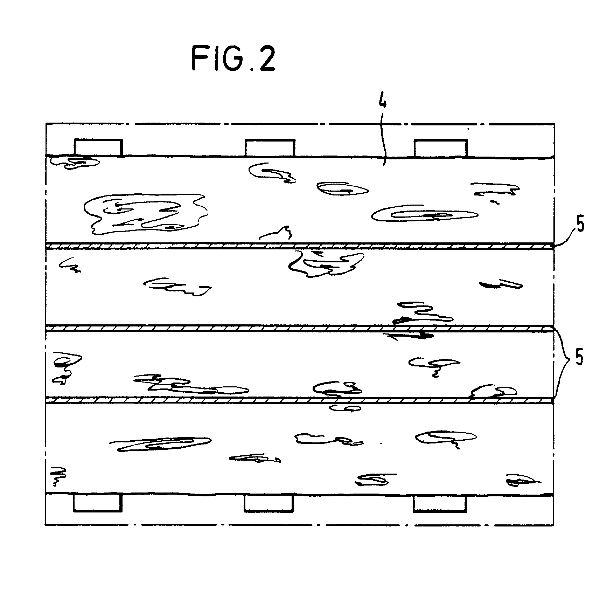

Fig. 2 zeigt den von der Videokamera 2 erfaßten Bildausschnitt 4, in welchem einige Videozeilen 5 dargestellt sind, die allein digitalisiert und abgespeichert werden. Die abgespeicherten Strukturen sind somit eindimensionale Helligkeitsprofile entlang diesen Bildzeilen 5. Grundsätzlich würde die Auswertung der von einer einzigen Bildzeile 5 stammenden Videosignale genügen, doch werden zur Erhöhung des Informationsflusses und damit auch der statistischen Genauigkeit mehrere Bildzeilen 5 erfaßt und abgespeichert. Dabei werden die Lage und der Abstand dieser Bildzeilen 5 so gewählt, daß die Helligkeitsprofile gegenseitig möglichst unkorreliert sind, damit der gesamte Informationsfluß möglichst groß wird.

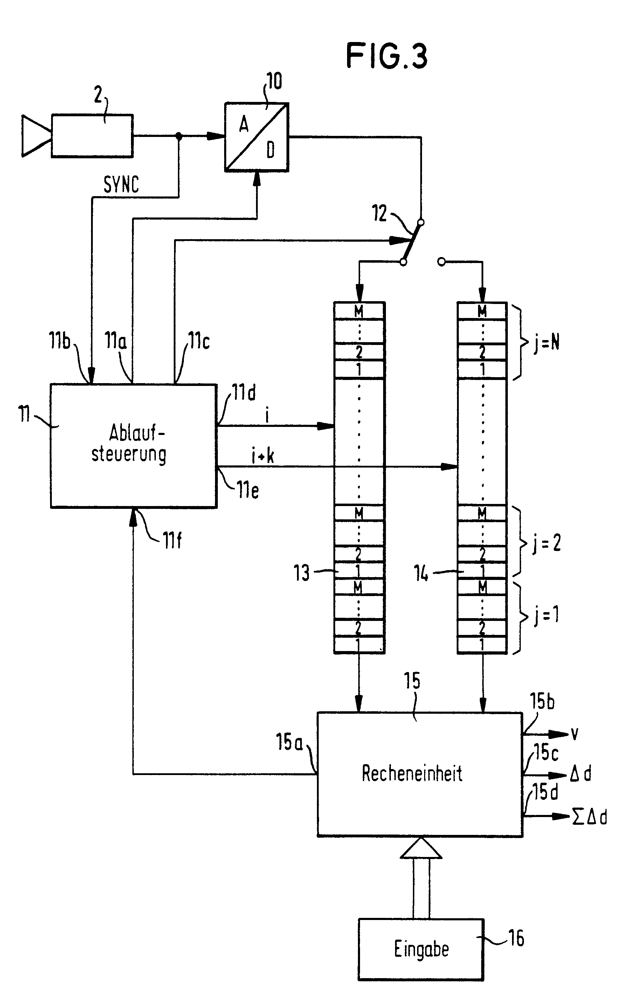

Fig. 3 zeigt das vereinfachte Blockschaltbild einer Ausführungsform der Signalverarbeitungsschaltung 3 von Fig. 1. Sie enthält einen Analog/Digital-Umsetzer 10, der das von der Videokamera 2 gelieferte Videosignal empfängt. Der Analog/Digital-Umsetzer 10 hat außerdem einen Steuereingang, der mit einem Ausgang 11a einer Ablaufsteuerung 11 verbunden ist. Die Ablaufsteuerung 11 empfängt auch die im Videosignal der Videokamera 2 enthalten Horizontal- und Vertikal-Synchronisationssignale SYNC, die einem Eingang 11b der Ablaufsteuerung 11 zugeführt werden.

Der Analog/Digital-Umsetzer 10 ist so ausgebildet, daß er die Helligkeitswerte von aufeinanderfolgenden Bildpunkten jeder ausgewählten Bildzeile 5 in digitale Signale umsetzt, die er am Ausgang abgibt. Für jeden Helligkeitswert wird ein digitales Datenwort gebildet, dessen Stellenzahl von der angewendeten Quantisierung abhängt. An den Ausgang des Analog/Digital-Umsetzers 10 ist ein Umschalter 12 angeschlossen, der von einem Ausgang 11c der Ablaufsteuerung 11 gesteuert wird. Je nach seiner Stellung führt der Umschalter 12 die digitalisierten Videosignale entweder einem ersten Profilspeicher 13 oder einem zweiten Profilspeicher 14 zu. Jeder Profilspeicher 13, 14 hat eine Kapazität, die für die Speicherung der digitalisierten Helligkeitswerte aller Bildpunkte aller ausgewählten Bildzeilen eines Videobildes ausreicht. Wenn beispielsweise in jedem Videobild N Bildzeilen ausgewählt werden und in jeder Bildzeile die Helligkeitswerte von M Bildpunkten digitalisiert werden, reicht die Kapazität jedes Profilspeichers 13, 14 für die Speicherung von M · N digitalisierten Helligkeitswerten aus. Wie in Fig. 3 angedeutet ist, stehen in jedem Profilspeicher 13, 14 die digitalisierten Helligkeitswerte der verschiedenen ausgewerteten Bildzeilen in aufeinanderfolgenden Blöcken, die mit j = 1, 2, ..., N numeriert sind, und innerhalb jedes Blocks stehen die digitalisierten Helligkeitswerte der ausgewählten Bildpunkte jeder Bildzeile in aufeinanderfolgenden Speicherplätzen die mit i = 1, 2, ..., M, numeriert sind. Alle angewählten Zeilenhelligkeitsprofile eines Videobildes werden somit hintereinander im gleichen Profilspeicher abgelegt, und sie bilden dort eine eindimensionale Datenstruktur mit ebensovielen Blöcken, wie Zeilen ausgewählt wurden, und mit so vielen Datenwörtern, wie Bildpunkte entlang einer Zeile digitalisiert wurden. Die Adressensteuerung der beiden Profilspeicher 13, 14 erfolgt durch Signale, die von Ausgängen 11d bzw. 11e der Ablaufsteuerung 11 abgegeben werden.

Die Leseausgänge der Profilspeicher 13 und 14 sind mit einer Recheneinheit 15 verbunden, in die außerdem mittels einer Eingabe 16 Daten von Hand eingegeben werden können. Ein Ausgang 15a der Recheneinheit 15 ist mit einem weiteren Eingang 11f der Ablaufsteuerung 11 verbunden. Ferner sind in Fig. 3 symbolisch weitere Ausgänge 15b, 15c, 15d der Recheneinheit 15 dargestellt, an denen die Rechenergebnisse ausgegeben werden. Die Ausgabe der Rechenergebnisse kann natürlich auf jede beliebige, dem Fachmann bekannte Weise erfolgen.

Die in Fig. 3 dargestellte Signalverarbeitungsschaltung arbeitet in folgender Weise:

Mittels der Eingabe 16 werden die Zeilenkoordinaten der auszuwählenden Bildzeilen eines Videobildes in die Recheneinheit 15 eingegeben und nach entsprechender Umrechnung durch die Recheneinheit 15 an den Eingang 11f der Ablaufsteuerung 11 angelegt. Die Ablaufsteuerung 11 hält den Umschalter 12 während der ganzen Abtastung eines Videobildes in der gleichen Stellung, so daß der Analog/Digital-Wandler 10 mit dem gleichen Profilspeicher, beispielsweise mit dem ersten Profilspeicher 13 verbunden bleibt. Wenn die Ablaufsteuerung 11 im Verlauf der Abtastung des Videobildes durch Abzählung der Horinzontal-Synchronimpulse eine Koinzidenz zwischen einer vom Anwender über die Eingabe 16 vorgegebenen Zeilenkoordinate mit der Zeilenkoordinate der gerade von der Videokamera 2 abgetasteten Bildzeile feststellt, gibt sie am Ausgang 11a ein Signal ab, das den Analog/Digital-Umsetzer 10 freigibt, so daß das von dieser Bildzeile stammende Videosignal digitalisiert wird. Ebenfalls nur dann werden die digitalisierten Helligkeitswerte dieser Bildzeile in den ersten Profilspeicher 13 eingegeben. Dieser Vorgang wiederholt sich für alle Bildzeilen des gleichen Videobildes, deren Zeilenkoordinaten mittels der Eingabe 16 eingegeben worden sind.

Nachdem das erste Video-Mehrfachzeilenbild im Profilspeicher 13 abgespeichert worden ist, wird eine ausreichende Verschiebung der Vorlage, also beim beschriebenen Beispiel des Stranggußbandes 1, abgewartet. Die Wartezeit $T_w$ wird mittels der Eingabe 16 eingegeben und so dimensioniert, daß bei der schnellsten vorkommenden Momentangeschwindigkeit des Stranggußbandes 1 sichergestellt ist, daß die Verschiebung des ersten Bildpunktes jeder Bildzeile noch innerhalb der ersten vertikalen Bildhälfte liegt.

Die Ablaufsteuerung 11 mißt die Wartezeit $T_w$ durch Abzählen von Vertikalsynchronimpulsen. Nach Ablauf der Wartezeit $T_w$ wird ein zweites Video-Mehrfachzeilenbild in dem zweiten Profilspeicher 14 abgespeichert. Zu diesem Zweck bringt die Ablaufsteuerung 11 den Umschalter 12 in die Stellung, in welcher er den Ausgang des Analog/Digital-Umsetzers 10 mit dem zweiten Profilspeicher 14 verbindet. Die Digitalisierung und Abspeicherung der Helligkeitswerte der Bildpunkte der ausgewählten Bildzeilen erfolgt dann unter der Regie der Ablaufsteuerung 11 in der gleichen Weise, wie dies zuvor für das erste Video-Mehrfachzeilenbild beschrieben worden ist.

Wenn die Abspeicherung des zweiten Video-Mehrfachzeilenbildes im Profilspeicher 14 beendet ist, wird anschliessend in einem dritten Zyklus mit Hilfe der Recheneinheit 15 eine Ähnlichkeitsfunktion zwischen den sich entsprechenden Zeilenprofilen gebildet, die in den beiden Profilspeichern 13 und 14 stehen. Diese Ähnlichkeitsfunktion ist ein Maß für die Ähnlichkeit der Helligkeitswerte aller Bildpunkte von zwei sich entsprechenden Zeilen aus zwei aufeinanderfolgenden, zeitlich um die Wartezeit $T_w$ versetzten Videobildern als Funktion der gegenseitigen örtlichen Verschiebung.

Ein geeignetes Ähnlichkeitsmaß ist z. B. die Summe der absoluten Differenzen sich entsprechender Bildpunkte:

$$D(k) = \sum_{j=0}^{N-1} \sum_{i=0}^{M-1-L} \left| x_j(i) - y_j(i+k) \right| \qquad (1)$$

$$\text{mit } 0 \leq k \leq L$$

Hierbei sind:

x: die Helligkeitswerte im Profilspeicher 13;
y: die Helligkeitsswerte im Profilspeicher 14;
i: Die Adressennummer des Bildpunktes entlang der Bildzeile;
j: die Koordinatennummer der digitalisierten Bildzeile;
k: der einer örtlichen Verschiebung in Vielfachen des Bildpunktabstands entsprechende Verschiebeindex.

Aus einem Videobild werden N Bildzeilen zu jeweils M Bildpunkten digitalisiert und abgespeichert. Hieraus wird die Ähnlichkeitsfunktion in Abhängigkeit vom Verschiebeindex k mit L Stützstellen ermittelt.

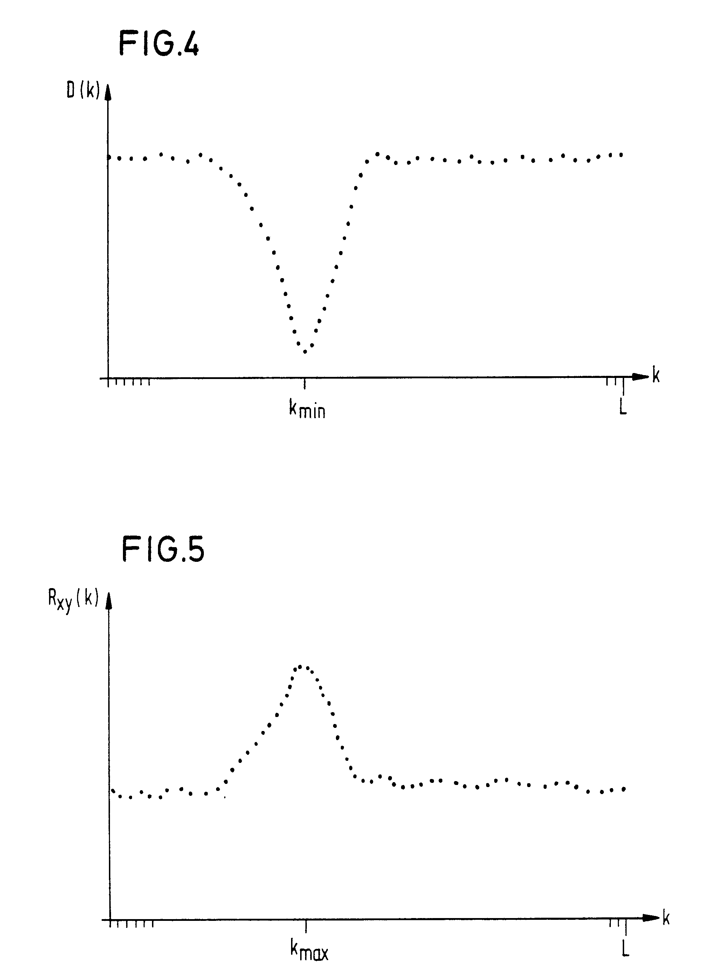

Die Ähnlichkeitsfunktion D(k) ist in Fig. 4 dargestellt. Die Punkte entsprechen den berechneten Stützstellen. Wie aus Fig. 4 zu erkennen ist, hat diese Ähnlichkeitsfunktion ein Minimum für denjenigen Verschiebeindex k, welcher die zwischenzeitlich erfolgte örtliche Verschiebung kompensiert. Dem Minimum der Ähnlichkeitsfunktion entspricht ein Maximum der Ähnlichkeit der miteinander verglichenen, gegeneinander verschobenen Zeilenhelligkeitsprofile. Die Bestimmung des das Minimum bezeichnenden Index $k_{min}$ wird von der Recheneinheit 15 durchgeführt; dies ist Stand der Technik.

Die Ähnlichkeitsfunktion D(k) stellt durch die beschriebene Abspeicherung mehrerer Bildzeilen eines Videobildes bereits einen Mittelwert über N Ähnlichkeitsfunktionen dar. Die Genauigkeit der Lage $k_{min}$ des Ähnlichkeitsmaximums wird mit der Anzahl N der ausgewerteten Zeilen erhöht, ohne daß hierdurch die Meßzeit vergrößert wird, die vor allem durch die Wartezeit $T_w$ bedingt ist. Dies ist ein wesentlicher Vorteil gegenüber bekannten Anordnungen, welche auf einer Zeilenkamera basieren und damit zwangsläufig nur eine Bildzeile auswerten können (siehe Th. Stöferle: "Berührungslose Abstands- und Geschwindigkeitsmessung". Bericht des Verein Deutscher Werkzeugmaschinenfabriken e.V. Januar 1980; H. Herbst, H.P. Grassl: "Simulations for a Rangefinder System for Lens-Shutter Cameras", Siemens Forsch. u. Entwicklungsberichte Bd. 11 (1982) Nr. 2). Ein weiterer Vorteil gegenüber der Verwendung von Zeilenkameras besteht darin, daß das von der Videokamera 2 abgetastete Videobild auf einem Videomonitor sichtbar gemacht werden kann, wodurch es möglich ist, die optische Ausrichtung, Funktion und Kalibrierung des Abbildungsmaßstabes zu überwachen.

Eine andere geeignete Ähnlichkeitsfunktion ist die Kreuzkorrelationsfunktion $R_{xy}(k)$ der in den Profilspeichern 13 und 14 gespeicherten Helligkeitswerte sich entsprechender Bildpunkte

$$R_{xy}(k) = \sum_{j=0}^{N-1} \sum_{i=0}^{M-1-L} \left[ x_j(i) \cdot y_j(i+k) \right] \qquad (2)$$

$$\text{mit } 0 \leq k \leq L$$

Darin haben die verschiedenen Buchstaben die gleiche Bedeutung wie zuvor. Der Verlauf der Kreuzkorrelationsfunktion $R_{xy}(k)$ ist in Fig. 5 dargestellt. Sie hat ein Maximum bei dem Verschiebeindex $k_{max}$, welcher die zwischenzeitlich erfolgte örtliche Verschiebung kompensiert.

Aufgrunde des bekannten Abbildungsmaßstabs der Videokamera 2 und des Abstands der ausgewerteten Bildpunkte jeder Bildzeile ist der von der Recheneinheit ermittelte Verschiebeindex $k_{min}$ (Fig. 4) bzw. $k_{max}$ (Fig. 5) ein Maß für die örtliche Verschiebung $\Delta d$ der Vorlage während des Zeitintervalls zwischen den beiden Videobildabtastungen. Da auch dieses Zeitintervall genau bekannt ist, läßt sich daraus die momentane Geschwindigkeit v der Vorlage berechnen. Die ab einem vorgegebenen Startpunkt aufsummierten Verschiebungen $\Delta d$ entsprechen der zu messenden Gesamtlänge $\Sigma \Delta d$. Alle diese Werte können von der Recheneinheit 15 berechnet und ausgegeben werden, wie an den Ausgängen 15b, 15c, 15d von Fig 3 angedeutet ist.

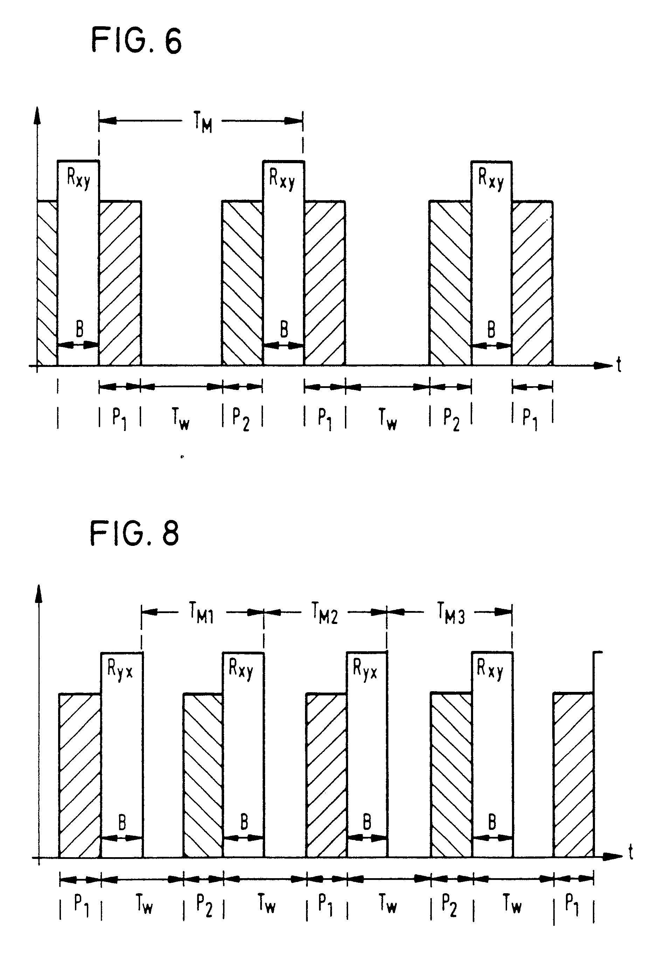

Da sich die Vorlage während der Zeit, welche zur Berechnung und Auswertung der Ähnlichkeitsfunktion benötigt wird, weiterbewegt, können mit der Signalverarbeitungsschaltung von Fig. 3 die Bewegungen der Vorlage, über der Zeit betrachtet, nicht lückenlos erfaßt werden. Dies ist aus dem Zeitdiagramm von Fig. 6 erkennbar, das schematisch den Ablauf der Operationen in der Signalverarbeitungsschaltung von Fig. 3 zeigt.

Die Dauer eines Meßzyklus ist mit $T_M$ bezeichnet.

In einem ersten Zeitintervall $P_1$ wird ein digitalisiertes Videobild in den Profilspeicher 13 eingelesen. Diese Zeitdauer entspricht einer Bildperiode (30 ms bei US-Norm, 20 ms bei Euro-Fernsehnorm). In der Wartezeit $T_w$ wird eine ausreichende, auswertbare Verschiebung der Vorlage abgewartet. Diese darf maximal die Hälfte einer Bildzeile betragen, damit ein kompletter Vergleich mit dem im Profilspeicher 13 gespeicherten Profil möglich ist. Dementsprechend wird dieser Vergleich auch nur über die Hälfte aller Bildpunkte durchgeführt. Nach dem Ablauf der Wartezeit $T_w$ erfolgt im Zeitintervall $P_2$ das Einlesen des nächsten digitalisierten Videobildes in den Profilspeicher 14. Anschließend ermittelt die Recheneinheit 15 im Zeitintervall B die Ähnlichkeitsfunktion, beispielsweise die Kreuzkorrelationsfunktion $R_{xy}$, und sie bestimmt die Lage des Maximums und berechnet anhand des Abbildungsmaßstabes die Momentanverschiebung $\Delta d$, die Momentan-Geschwindigkeit v und die aufsummierte Länge $\Sigma\Delta d$. Damit ist ein kompletter Meßzyklus der Dauer $T_M$ abgearbeitet, und der gleiche Vorgang wiederholt sich periodisch. Die ermittelte Momentanverschiebung $\Delta d$ ist der sich aus dem Korrelationsmaximum ergebenden Verschiebung des Videobildes direkt proportional, also unabhängig von Geschwindigkeitsschwankungen während dieser Verschiebung. Dagegen ist das Zeitintervall B, in welchem die diversen Berechnungen und Entscheidungen durchgeführt werden, eine Zeitlücke, in welcher Bewegungen der Vorlage nicht erfaßt werden. Insbesondere bei ruckhaften Bewegungen der Vorlage, wie sie beim Strangguß vorliegen, werden hierdurch die in diesen Zeitlücken stattfindenden Verschiebungen überhaupt nicht wahrgenommen, so daß diese voll in den Fehler der Gesamtlänge eingehen. Lediglich bei stationären Geschwindigkeiten könnte durch eine Integration der Momentangeschwindigkeiten eine interpolierte Gesamtlänge ermittelt werden; diese Voraussetzung kann aber z. B. beim Strangguß überhaupt nicht angenommen werden, da hier bei langsamer Bewegung von ca. 3 m/min schnelle Geschwindigkeitsschwankungen mit einer Periode von 300 ms und einer Amplitude von $\pm 2$ m/min auftreten. Damit versagen bei dieser Anwendung auch alle Verfahren, welche von einer Geschwindigkeitsmessung ausgehen, wie Doppler- und Laufzeitkorrelationsverfahren, da hierbei immer die Annahme einer zumindest während der eigentlichen Meßzeit stationären Geschwindigkeit getroffen werden muß.

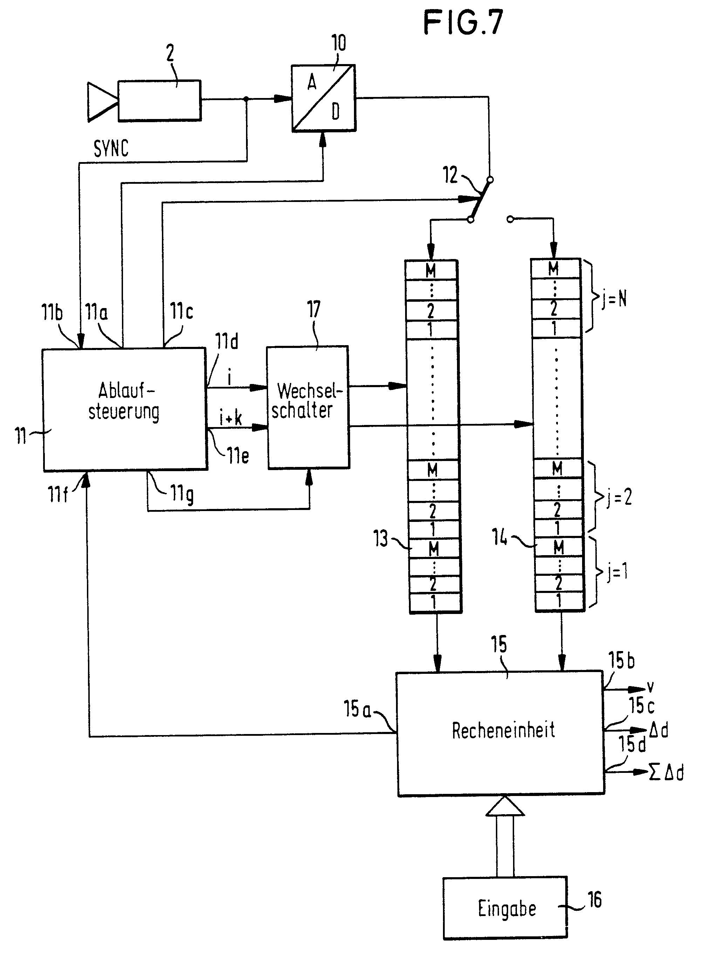

In Fig. 7 ist eine abgeänderte Signalverarbeitungsschaltung dargestellt, mit welcher die Bewegung der Vorlage ohne zeitliche Lücken vollständig erfaßt werden kann. Dies wird dadurch erreicht, daß die Berechnungslücke durch ein alternierendes Verfahren vollständig eliminiert wird und die Gesamtlänge ausschließlich durch Summation der Momentanverschiebungen $\Delta d$ und nicht teilweise durch zeitliche Integration einer Momentangeschwindigkeit ermittelt wird. Das Zeitdiagramm von Fig. 8 verdeutlicht dieses Verfahren. Es sind mehrere aufeinanderfolgende Meßzyklen dargestellt, die mit $T_{M1}$, $T_{M2}$, $T_{M3}$ bezeichnet sind. In jedem Meßzyklus wird nur ein Profilspeicher neu eingelesen, und sein Inhalt wird mit dem im vorhergehenden Meßzyklus eingelesenen Inhalt des anderen Profilspeichers auf Ähnlichkeit untersucht. Zwischen jeweils zwei aufeinanderfolgenden Einlesungen liegt die gleiche Wartezeit $T_w$, und die Berechnungszeit B fällt wenigstens teilweise mit einer Wartezeit $T_w$ zusammen. So wird im Meßzyklus $T_{M1}$ der Profilspeicher 14 während des Zeitintervalls $P_2$ eingelesen, und in der anschließenden Berechnungszeit B wird die Kreuzkorrelationsfunktion $R_{xy}$ zwischen dem neu eingelesenen Inhalt des Profilspeichers 14 und dem im vorhergehenden Meßzyklus eingelesenen Inhalt des Profilspeichers 13 gebildet. Im nächsten Meßzyklus $T_{M2}$ wird im Zeitintervall $P_1$ der Profilspeicher 13 neu eingelesen, und es wird die Kreuzkorrelationsfunktion zwischen diesem neu eingelesenen Inhalt des Profilspeichers 13 und dem im Meßzyklus $T_{M1}$ eingelesenen Inhalt des Profilspeichers 14 gebildet. Da aber nunmehr der Inhalt des Profilspeichers 14 der früher eingelesene Inhalt ist, wird in diesem Fall die Kreuzkorrelationsfunktion $R_{xy}$ gebildet. Der gleiche Vorgang wiederholt sich periodisch, wobei abwechselnd die Kreuzkorrelationsfunktionen $R_{xy}(k)$ und $R_{yx}(k)$ von der Recheneinheit ermittelt werden. Einzige Voraussetzung hierzu ist, daß die Wartezeit $T_w$ länger als die benötigte Rechenzeit B ist. Dies ist aber insbesondere im Bereich niedriger Geschwindigkeiten ohne weiteres zu erreichen.

Wie aus dem Diagramm von Fig. 8 zu erkennen ist, wechselt fortlaufend von Meßzyklus zu Meßzyklus der bei der Berechnung unter der Regie der Ablaufsteuerung 11 verschoben auszulesende Profilspeicher. Während bei der Signalverarbeitungsschaltung von Fig. 3 stets der Profilspeicher 13 mit der Adresse i und der Profilspeicher 14 mit der verschobenen Adresse i+k ausgelesen wird, muß bei der Signalverarbeitungsschaltung von Fig. 8 die Zuordnung der Adressen i und i+k zu den Profilspeichern 13 und 14 von Meßzyklus zu Meßzyklus alternierend vertauscht werden. Zu diesem Zweck ist zwischen die Ablaufsteuerung 11 und die beiden Profilspeicher 13 und 14 ein Wechselschalter 17 eingefügt, der von einem weiteren Ausgang 11g der Ablaufsteuerung 11 im Rhythmus der Meßzyklen periodisch so betätigt wird, daß er von Meßzyklus zu Meßzyklus alternierend entweder dem Profilspeicher 13 oder dem Profilspeicher 14 die verschobene Adresse i+k und entsprechend dem anderen Profilspeicher die nicht verschobene Adresse i zuordnet. Die übrigen Bestandteile der Signalverarbeitungsschaltung von Fig. 7 können den gleichen Aufbau wie die entsprechenden Bestandteile der Signalverarbeitungsschaltung von Fig. 3 haben, und sie sind deshalb auch mit den gleichen Bezugszeichen bezeichnet. Sie haben auch im wesentlichen die gleichen Funktionen, wenn man davon absieht, daß die Zeitsteuerung des Analog/Digital-Umsetzers 10 und des Umschalters 12 durch die Ablaufsteuerung 11 nunmehr so erfolgt, daß das Einlesen in die Profilspeicher 13 und 14 in stets gleichen Zeitabständen $T_w$ wechselt.

Die durch extrem ruckweise Bewegungen hervorgerufene Bewegungsunschärfe des Kamerabildes kann durch eine mit dem Bildwechsel synchronisierte Blende oder durch stroboskopische Beleuchtung ausgeschlossen werden, so daß bei dem beschriebenen zeitlückenlosen Verfahren auch extreme Bewegungsänderungen voll erfaßt werden und zu keinem Fehler in der ermittelten Gesamtlänge führen.

Eine Weiterbildung des beschriebenen Verfahrens besteht darin, nicht das originale Helligkeitsprofil, sondern das differenzierte kanten-betonende Profil abzuspeichern und auszuwerten. Damit können ungleichmäßige Ausleuchtungen der Vorlage, die winkelabhängige Lichtmenge aufgrund des Alembert'schen Gesetzes sowie Veränderungen der Gesamthelligkeit, z. B. infolge sich verändernder Umgebungshelligkeit ausgeglichen werden. Dadurch, daß die Zeilenabtastung parallel und nicht senkrecht zur Bewegung der Vorlage ausgerichtet ist, läßt sich diese Differenzierung statt mit einem räumlichen Filter mit einem wesentlich einfacheren Zeitfilter, z. B. einem CR-Hochpaß durchführen. Dies ist bei einer Bewegung der Vorlage quer zur Zeilenabtastung nicht möglich, da dann örtlich aufeinanderfolgende Bildpunkte nicht zeitlich aufeinanderfolgen.

Die Ermittlung der Ähnlichkeitsfunktion und ihrer Auswertung ist Stand der Technik und braucht nicht näher beschrieben zu werden, ebenso die Auswahl geeigneter Ähnlichkeitsfunktionen.

Die Ausgangssignale der Recheneinheit 15 können in jeder an sich bekannten Weise verwertet werden. Beispielsweise kann das am Ausgang 15d abgegebene Signal, das die seit dem Startzeitpunkt vorgeschobene Gesamtlänge $\Sigma\Delta d$ des Stranggußbandes 1 darstellt, kontinuierlich mit einem Sollwert verglichen werden. Sobald dieses Signal den Sollwert erreicht, wird ein Steuersignal abgegeben, das beispielsweise eine Schneidevorrichtung auslöst, die ein Stück mit der abgemessenen Gesamtlänge von dem Stranggußband abschneidet. Der Zeitpunkt der Abgabe des Steuersignals ist zugleich der Startzeitpunkt für eine neue Längenmessung.

**Patentansprüche**

1. Verfahren zur berührungslosen Messung der Länge eines bewegten Gegenstandes mit strukturierter Oberfläche, bei welchem Videobilder der Oberfläche des bewegten Gegenstandes aufgenommen werden und in aufeinanderfolgenden Meßzyklen jeweils das Helligkeitsprofil von wenigstens einer ausgewählten Bildzeile eines ersten Videobildes abgespeichert wird, das bzw. jedes abgespeicherte Helligkeitsprofil mit den Helligkeitsprofilen von Bildzeilen eines nach einer vorbestimmten Wartezeit abgetasteten zweiten Videobildes durch Bildung einer Ähnlichkeitsfunktion verglichen wird, aus dem Extremwert der Ähnlichkeitsfunktion die während der Wartezeit erfolgte Momentanverschiebung des bewegten Gegenstandes ermittelt wird und die in aufeinanderfolgenden Meßzyklen ermittelten Momentanverschiebungen summiert werden, dadurch gekennzeichnet, daß die Zeilenabtastung des Videobildes parallel zu der Bewegungsrichtung des bewegten Gegenstandes erfolgt, daß von dem nach der Wartezeit aufgenommenen zweiten Videobild das Helligkeitsprofil der gleichen ausgewählten Bildzeile bzw. die Helligkeitsprofile der gleichen ausgewählten Bildzeilen wie bei dem ersten Videobild abgespeichert werden und daß die Ähnlichkeitsfunktion durch Vergleich der abgespeicherten Helligkeitsprofile von jeweils zwei gleichen Bildzeilen der beiden Videobilder gebildet wird, wobei das abgespeicherte Helligkeitsprofil der Bildzeile des einen Videobildes gegen das abgespeicherte Helligkeitsprofil der Bildzeile des anderen Videobildes sukzessiv verschoben ausgelesen wird.

2. Verfahren nach Anspruch 1, dadurch gekennzeichnet, daß in jedem Meßzyklus die Abspeicherung der Helligkeitsprofile der ausgewählten Bildzeilen von nur einem Videobild erfolgt, das im Abstand der Wartezeit nach dem Videobild abgetastet wird, dessen Helligkeitsprofile im vorhergehenden Meßzyklus abgespeichert worden sind, daß die Bestimmung der Ähnlichkeitsfunktion zwischen den Helligkeitsprofilen der in zwei aufeinanderfolgenden Meßzyklen abgetasteten Videobilder während der Wartezeit zwischen zwei für die Abspeicherung bestimmten Videobildabtastungen erfolgt, und daß die gespeicherten Helligkeitsprofile jedes in einem Meßzyklus abgetasteten Videobildes zunächst mit den gespeicherten Helligkeitsprofilen des im vorhergehenden Meßzyklus abgetasteten Videobildes und dann mit den gespeicherten Helligkeitsprofilen des im nachfolgenden Meßzyklus abgetasteten Videobildes verglichen werden.

3. Verfahren nach Anspruch 1 oder 2, dadurch gekennzeichnet, daß das Videosignal vor der Abspeicherung zur Betonung der Kanten des Helligkeitsprofils differenziert wird.

4. Verfahren nach einem der Ansprüche 1 bis 3, dadurch gekennzeichnet, daß das Videosignal jeder für die Abspeicherung bestimmten Bildzeile vor der Abspeicherung digitalisiert wird.

5. Verfahren nach einem der Ansprüche 1 bis 4, dadurch gekennzeichnet, daß die aufsummierten Momentanverschiebungen kontinuierlich mit einem vorgegebenen Sollwert verglichen werden, und daß bei Erreichen des Sollwerts ein Steuersignal abgegeben wird.

6. Verfahren nach einem der Ansprüche 1 bis 5, dadurch gekennzeichnet, daß aus der in jedem Meßzyklus ermittelten Momentanverschiebung und dem Zeitintervall zwischen zwei Videobildabtastungen, deren Helligkeitsprofile zur Bildung der Ähnlichkeitsfunktion miteinander verglichen werden, die momentane Geschwindigkeit des bewegten Gegenstandes ermittelt wird.

7. Meßvorrichtung zur berührungslosen Messung der Länge eines bewegten Gegenstandes mit strukturierter Oberfläche, mit einer zur Aufnahme eines Bildausschnitts (4) der Oberfläche des bewegten Gegenstandes (1) angeordneten Videokamera (2), einer Speicheranordnung (13, 14) für die Abspeicherung des Helligkeitsprofils von wenigstens einer Bildzeile (5) eines von der Videokamera (2) abgetasteten Videobildes, einer mit der Speicheranordnung (13, 14) verbundenen Recheneinheit (15), welche unter Verwendung der in der Speicheranordnung (13, 14) abgespeicherten Helligkeitsprofile eine Ähnlichkeitsfunktion berechnet und aus

8

EP 0 157 148 B1

dem Extremwert der Ähnlichkeitsfunktion die Momentanverschiebung des bewegten Gegenstandes ermittelt, und mit einer Ablaufsteuerung (11) zur Steuerung des Einlesens der Helligkeitsprofile in die Speicheranordnung und der Verarbeitung der abgespeicherten Helligkeitsprofile, dadurch gekennzeichnet, daß die Videokamera (2) so ausgerichtet ist, daß die Zeilenabtastrichtung parallel zu der Bewegungsrichtung des bewegten Gegenstandes (1) liegt, daß die Speicheranordnung zwei Profilspeicher (13, 14) enthält, von denen jeder eine für die Speicherung aller abzuspeichernden Helligkeitsprofile eines Videobildes ausreichende Kapazität hat, daß die Ablaufsteuerung (11) das Einlesen der abzuspeichernden Helligkeitsprofile eines Videobildes in den einen Profilspeicher (13), nach Ablauf einer Wartezeit $(T_w)$ das Einlesen der abzuspeichernden Helligkeitsprofile eines weiteren Videobildes in den anderen Profilspeicher (14) und das gleichzeitige Auslesen der Inhalte der beiden Profilspeicher (13, 14) mit gegenseitig verschobenen Adressen (i, i+k) zu der Recheneinheit (15) steuert, in welcher in jedem Meßzyklus für jeden Verschiebeindex der sukzessiven Verschiebung ein Ähnlichkeitsmaß zwischen den Inhalten der beiden Profilspeicher (13, 14) gebildet und der Extremwert der sich aus den Ähnlichkeitsmaßen aller sukzessiven Verschiebungen ergebenden Ähnlichkeitsfunktion ermittelt wird, und daß die Recheneinheit (15) aus dem diesem Extremwert entsprechenden Verschiebeindex der sukzessiven Verschiebung die Momentanverschiebung des bewegten Gegenstandes ermittelt und die in den aufeinanderfolgenden Meßzyklen erhaltenenen Momentanverschiebungen zur Bestimmung der aufgelaufenen Länge des bewegten Gegenstandes aufsummiert.

8. Meßvorrichtung nach Anspruch 7, dadurch gekennzeichnet, daß zwischen die Videokamera (2) und die Profilspeicher (13, 14) ein Analog/Digital-Wandler (10) eingefügt ist, der von der Ablaufsteuerung (11) bei der Abtastung jeder für die Abspeicherung des Helligkeitsprofils bestimmten Bildzeile freigegeben wird.

9. Meßvorrichtung nach Anspruch 8, dadurch gekennzeichnet, daß zwischen den Analog/Digital-Wandler (10) und die Profilspeicher (13, 14) ein von der Ablaufsteuerung (11) gesteuerter Umschalter (12) eingefügt ist.

10. Meßvorrichtung nach einem der Ansprüche 7 bis 9, dadurch gekennzeichnet, daß zwischen die Ablaufsteuerung (11) und die Adresseneingänge der Profilspeicher (13, 14) ein Wechselschalter (17) eingefügt ist, der die gegenseitig verschobenen Auslese-Adressen (i, i+k) der beiden Profilspeicher (13, 14) von Meßzyklus zu Meßzyklus vertauscht.

11. Meßvorrichtung nach einem der Ansprüche 7 bis 10, gekennzeichnet durch eine Eingabevorrichtung (16) zur Eingabe der Zeilenkoordinaten der Bildzeilen eines Videobildes, deren Helligkeitsprofile abzuspeichern sind, sowie zur Eingabe der Wartezeit $(T_w)$.

## Claims

1. Method for the contactless measurement of the length of a moving object with structured surface in which video images of the surface of the moving object are taken and in each of consecutive measuring cycles the brightness profile of at least one selected image line of a first video image is stored, the or each stored brightness profile compared by formation of a similarity function with the brightness profiles of image lines of a second video image scanned after a predetermined waiting time, from the extreme value of the similarity function the instantaneous displacement of the moving object which has taken place during the waiting time is determined and the instantaneous displacements determined in consecutive measuring cycles summated, characterized in that the line scanning of the video image takes place parallel to the movement direction of the moving object, that of the second video image taken after the waiting time the brightness profile of the same selected image line or the brightness profiles of the same selected image lines as in the first video image are stored and that the similarity function is formed by comparing the stored brightness profiles in each case of two identical image lines of the two video images, the stored brightness profile of the image line of the one video image being read out successively displaced with respect to the stored brightness profile of the image line of the other video image.

2. Method according to claim 1, characterized in that in each measuring cycle the storing of the brightness profiles of the selected image lines is carried out for only one video image which is scanned at the interval of the waiting time after the video image of which the brightness profiles have been stored in the preceding measuring cycle, that the determination of the similarity function between the brightness profiles of the video images scanned in two consecutive measuring cycles takes place during the waiting time between two video image scannings intended for the storing and that the stored brightness profiles of each video image scanned in a measuring cycle are first compared with the stored brightness profiles of the video image scanned in the preceding measuring cycle and then with the stored brightness profiles of the video image scanned in the following measuring cycle.

3. Method according to claim 1 or 2, characterized in that the video signal is differentiated prior to the storing to emphasize the edges of the brightness profile.

4. Method according to any one of claims 1 to 3, characterized in that the video signal of each image line intended for storing is digitized prior to storing.

5. Method according to any one of claims 1 to 4, characterized in that the summated instantaneous displacements are continuously compared with a predetermined reference value and that on reaching the reference value a control signal is emitted.

6. Method according to any one of claims 1 to 5, characterized in that from the instantaneous displacement determined in each measuring cycle and the time interval between two video image scannings of which the brightness profiles are compared with each other for forming the similarity function the instantaneous velocity of the moving object is determined.

7. Measuring apparatus for the contactless measurement of the length of a moving object with structured surface, comprising a video camera (2) arranged to take an image fragment (4) of the surface of the moving object (1), a memory arrangement (13, 14) for storing the brightness profile of at least one image line (5) of a video image scanned by the video camera (2), a central data processor (15) which is connected to the memory arrangement (13, 14) and which using the brightness profiles stored in the memory arrangements (13, 14) calculates a similarity function and from the extreme value of the similarity function determines the instantaneous displacement of the moving object and a sequence control (11) for controlling the reading of the brightness profiles into the memory arrangement and the processing of the stored brightness profiles, characterized in that the video camera (2) is so aligned that the line scanning direction lies parallel to the movement direction of the moving object (1), that the memory arrangement includes two profile memories (13, 14), each of which has adequate capacity for the storage of all the brightness profiles of a video image to be stored, that the sequence control (11) controls the reading of the brightness profiles of a video image to be stored Into the one profile memory (13), after expiry of a waiting time ($T_w$) the reading of the brightness profiles of a further video image to be stored into the other profile memory (14) and the simultaneous reading out of the contents of the two profile memories (13, 14) with mutually displaced addresses (i, i+k) to the central data processor (15) in which in each measuring cycle for each displacement index of the successive displacement a similarity extent is formed between the contents of the two profile memories (13, 14) and the extreme value of the similarity function resulting from the similarity extents of all the successive displacements is determined, and that the central data processor (15) determines from the displacement index of the successive displacement corresponding to said extreme value the instantaneous displacement of the movjng object and summates the instantaneous displacements obtained in the successive measuring cycles to obtain the accumulated length of the moving object.

8. Measuring apparatus according to claim 7, characterized in that between the video camera (2) and the profile memories (13, 14) an analog/digital converter (10) is inserted which is enabled by the sequence control (11) in the scanning of each image line intended for storing of the brightness profile.

9. Measuring apparatus according to claim 8, characterized in that between the analog/digital converter (10) and the profile memories (13, 14) a changeover switch (12) controlled by the sequence control (11) is inserted.

10. Measuring apparatus according to any one of claims 7 to 9, characterized in that between the sequence control (11) and the address inputs of the profile memories (13, 14) a changeover switch (17) is inserted which from measuring cycle to measuring cycle interchanges the mutually displaced readout addresses (i, i+k) of the two profile memories (13, 14).

11. Measuring apparatus according to any one of claims 7 to 10, characterized by an input means (16) for entering the line coordinates of the image lines of a video image of which the brightness profiles are to be stored and for entering the waiting time ($T_w$).

**Revendications**

1. Méthode de mesure sans contact de la longueur d'un objet en mouvement à surface structurée, dans laquelle des images vidéo de la surface de l'objet en mouvement sont obtenues et, dans des cycles de mesure successifs, chaque fois le profil de luminosité d'au moins une ligne d'image sélectionnée d'une première image vidéo est mémorisé, le ou chaque profil de luminosité mémorisé est comparé aux profils de luminosité de lignes d'image d'une deuxième image vidéo obtenue par analyse après un temps d'attente déterminé, par calcul d'une fonction de similitude, le déplacement instantané de l'objet en mouvement étant déterminé à partir de l'extremum de la fonction de similitude et les déplacements instantanés déterminés dans les cycles successifs étant sommés, caractérisée en ce que le balayage des lignes de l'image vidéo s'effectue parallèlement à la direction du mouvement de l'objet en mouvement, que dans la deuxième image vidéo obtenue après le temps d'attente, le profil de luminosité de la même ligne d'image sélectionnée ou les profils de luminosité des mêmes lignes d'image sélectionnées comme dans la première image vidéo, sont mémorisés, et que la fonction de similitude est calculée en comparant chaque fois les profils de luminosité mémorisés de deux lignes d'image identiques des deux images vidéo, le profil de luminosité mémorisé de la ligne d'image d'une image vidéo étant lu en mémoire avec un décalage successif par rapport au profil de luminosité mémorisé de la ligne d'image de l'autre image vidéo.

2. Méthode de mesure selon la revendication 1, caractérisée en ce que dans chaque cycle de mesure, la mémorisation des profils de luminosité des lignes d'image sélectionnées ne s'effectue que pour une image vidéo qui est obtenue par analyse après le temps d'attente qui suit l'image vidéo dont le profil de luminosite a été mémorisé dans le cycle de mesure précédent, que le calcul de la fonction de similitude entre les profils de luminosité des images vidéo obtenues par analyse dans deux cycles de mesure successifs s'effectue pendant le temps d'attente écoulé entre deux analyses d'image vidéo destinées à être mémorisées, et que les profils de luminosité mémorisés de chaque image vidéo obtenue par analyse dans un cycle de mesure sont d'abord comparés aux profils de luminosité mémorisés de l'image vidéo obtenue par analyse dans le cycle de mesure précédent et ensuite aux profils de luminosité mémorisés de l'image vidéo obtenue par analyse dans le cycle de mesure suivant.

3. Méthode de mesure selon la revendication 1 ou 2, caractérisée en ce que le signal vidéo est différentié avant la mémorisation pour accentuer les arrêtes du profil de luminosité.

4. Méthode de mesure selon l'une des revendications précédentes, caractérisée en ce que le signal vidéo de chaque ligne d'image destinée à êtré mémorisée est numérisé avant la mémorisation.

5. Méthode de mesure selon l'une des revendications précédentes, caractérisée en ce que les déplacements instantanés sommés sont comparés en permanence à une valeur de référence, et que lorsque la valeur de référence est atteinte, un signal de commande est émis.

6. Méthode de mesure selon l'une des revendications précédentes, caractérisée en ce que la vitesse instantanée de l'objet en mouvement est déterminée à partir du déplacement instantané déterminé dans chaque cycle de mesure et de l'intervalle de temps écoulé entre deux analyses d'image vidéo dont les profils de luminosité sont comparés entre eux pour calculer la fonction de similitude.

7. Appareillage de mesure pour la mesure sans contact de la longueur d'un objet en mouvement à surface structurée, comprenant une caméro vidéo (2) disposée pour la prise de vue d'une image partielle (4) de la surface de l'objet en mouvement (1), un montage de mémoires (13, 14) pour la mémorisation du profil de luminosité d'au moins une ligne d'image (5) d'une image vidéo analysée par la caméra vidéo, une unité de calcul (15) reliée au montage de mémoires (13, 14) et qui, utilisant les profils de luminosité mémorisés dans le montage de mémoires (13, 14), calcule une fonction de similitude et déduit de l'extremum de la fonction de similitude le déplacement instantané de l'objet en mouvement, et une commande séquentielle (11) pour commander l'écriture des profils de luminosité dans le montage de mémoires (13, 14) et le traitement des profils de luminosité mémorisés, caractérisé en ce que la caméro vidéo (2) est orientée de telle manière que le balayage des lignes soit parallèle à la direction du mouvement de l'objet en mouvement (1), que le montage de mémoires comprend deux mémoires de profils (13, 14) dont chacune a une capacité suffisante pour la mémorisation de tous les profils de luminosité à mémoriser d'une image vidéo, que la commande séquentielle (11) commande l'écriture des profils de luminosité à mémoriser d'une image vidéo dans l'une des mémoires de profils (13) et, après écoulement d'un temps d'attente ($T_w$), l'écriture des profils de luminosité à mémoriser d'une autre image vidéo dans l'autre mémoire de profils (14), et la lecture simultanée des contenus des deux mémoires de profils (13, 14) avec des adresses (i, i+k) décalées l'une par rapport à l'autre à destination de l'unité de calcul (15), dans laquelle, dans chaque cycle de mesure et pour chaque indice de déplacement des déplacements successifs, une mesure de similitude entre le contenu des deux mémoires de profils (13, 14) est obtenue et l'extremum de la fonction de similitude qui résulte des mesures de similitude de tous les déplacements successifs est déterminé, et que l'unité de calcul (15) déduit de l'indice de déplacement des déplacements successifs correspondant à cet extremum le déplacement instantané de l'objet en mouvement et fait la somme les déplacements instantanés obtenus dans les cycles de mesure successifs pour déterminer la longueur passée de l'objet en mouvement.

8. Appareillage de mesure selon la revendication 7, caractérisé en ce que, entre la caméro vidéo (2) et les mémoires de profils (13, 14), un convertisseur analogique/numérique (10) est inséré qui est débloqué par la commande séquentielle (11) lors de l'analyse de chaque ligne d'image destinée à la mémorisation du profil de luminosité correspondant.

9. Appareillage de mesure selon la revendication 8, caractérisé en ce que, entre le convertisseur analogique/numérique (10) et les mémoires de profils (13, 14), un commutateur (12) commandé par la commande séquentielle (11) est inséré.

10. Appareillage de mesure selon l'une des revendications 7 à 9, caractérisé en ce que, entre la commande séquentielle (11) et les entrées d'adresses des mémoires de profils (13, 14), un permutateur (17) est inséré qui permute les adresses de lecture décalées l'une par rapport à l'autre (i, i+k) des deux mémoires de profils (13, 14) d'un cycle de mesure au suivant.

11. Appareillage de mesure selon l'une des revendications 7 à 10, caractérisé en ce qu'il comporte un dispositif d'entrée de données (16) pour introduire les coordonnées de ligne des lignes d'image d'une image vidéo dont les profils de luminosité sont à mémoriser, ainsi que pour introduire le temps d'attente ($T_w$).

# FIG.1

Signalverarbeitungsschaltung

3

2

v

Δ

ΣΔ d

4

1

5

5

v(t)

# FIG.2

# FIG.3

## FIG.4

## FIG.5

# FIG. 6

# FIG. 8

# FIG.7